(19) 

Europäisches
Patentamt
European
Patent Office
Office européen
des brevets

(11) **EP 4 625 679 A1**

(12) **EUROPEAN PATENT APPLICATION**
published in accordance with Art. 153(4) EPC

(43) Date of publication:
**01.10.2025 Bulletin 2025/40**

(21) Application number: **23893549.8**

(22) Date of filing: **30.10.2023**

(51) International Patent Classification (IPC):
*H01M 50/533* $^{(2021.01)}$

(52) Cooperative Patent Classification (CPC):
**H01M 50/533; H01M 50/538; H01M 50/569;
H01M 50/593;** Y02E 60/10

(86) International application number:
**PCT/CN2023/127615**

(87) International publication number:
**WO 2024/109458 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022 CN 202211485327**

(71) Applicants:
• **AESC Jiangsu Co., Ltd.
Wuxi, Jiangsu 214443 (CN)**

• **AESC Shanghai Co., Ltd.
Shanghai 201315 (CN)**

(72) Inventors:
• **ZHOU, Zhongbin
Shanghai 201315 (CN)**
• **HE, Yafei
Shanghai 201315 (CN)**

(74) Representative: **Becker, Eberhard
Becker Kurig & Partner
Patentanwälte mbB
Bavariastraße 7
80336 München (DE)**

(54) **SOFT-PACK CELL, TAB BENDING METHOD FOR SOFT-PACK CELL, AND BATTERY PACK**

(57) Provided are a soft-pack cell, a tab bending method for a soft-pack cell, and a battery pack. The soft-pack cell comprises a cell body and tabs. The tabs each comprise a body connecting part, an extending part, and a high-low voltage connecting part. The body connecting part is connected to the cell body and extends in the length direction of the cell body; the extending part extends in the height direction of the cell body; and the high-low voltage connecting part protrudes out of the top surface of the cell body in the height direction thereof. Each tab can be bent at the connecting position of the body connecting part and the extending part and the connecting position of the extending part and the high-low voltage connecting part, and thus the high-low voltage connecting part of each tab of the soft-pack cell can be bent to a position above the soft-pack cell in the height direction thereof, thereby facilitating subsequent tab welding and sampling arrangement, and improving the space utilization and the energy density of the battery pack because there is no need to reserve excessive space in the width direction of the battery pack.

FIG. 4

EP 4 625 679 A1

## Description

Technical Field

The present invention relates to the field of battery technology, and in particular to a pouch cell, a tab bending method for the pouch cell, and a battery pack.

Description of Related Art

Pouch cells are important components as well as the main development direction in power batteries. A common power battery includes a casing and a cell stack body, the cell stack body is arranged inside the casing, and the cell stack body is formed by stacking a plurality of pouch cells. In the related art, in order to achieve temperature and voltage sampling inside the power battery, it is usually necessary to arrange insulating brackets at two ends in the length direction of the cell stack body, with busbars fixed on the insulating brackets. The tabs of the cell stack body then extend out from both ends in the length direction of the cell stack body and are bent and fixed on the busbars on the insulating brackets, so as to achieve electrical connection with the busbars. The sampling elements are electrically connected to the busbars finally, so that the sampling arrangement of the power battery is completed.

However, the existing sampling arrangement solution has the following disadvantages: 1) The welding of the tabs of the cell stack body to the busbars is located at the end surface in the length direction of the cell stack body, which is inconvenient for welding operations; 2) The sampling arrangement at the end surface in the length direction of the cell stack body increases the difficulty of arrangement and the length of sampling wires, spaces are thus wasted; 3) It is necessary to arrange insulating brackets at the end surface in the length direction of the cell stack body. Further, due to the limitation of the tab welding direction, an excessive space needs to be reserved at the end surface in the length direction of the cell stack body, so the space utilization of the battery pack is lowered.

Therefore, there is an urgent need for a pouch cell to solve the above problems.

Summary

The first objective of the present invention is to provide a pouch cell, which facilitates subsequent tab welding and sampling arrangement and improves space utilization of a battery pack.

The second objective of the present invention is to provide a tab bending method for the pouch cell, so as to facilitate subsequent tab welding and sampling arrangement, improve the space utilization of the battery pack, and increase energy density of the battery pack.

The third objective of the present invention is to provide a battery pack, through which, by applying the aforementioned pouch cell, the electrical connection of tabs between multiple pouch cells in the battery pack and sampling arrangement is facilitated, and space utilization and energy density of the battery pack are improved.

To achieve the above, the following technical solutions are provided.

According to the first aspect, a pouch cell is provided, including:

a cell body; and
tabs, where two of the tabs are symmetrically connected to two ends of the cell body in a length direction of the cell body, each tab includes a body connecting part, an extending part, and a high-low voltage connecting part connected in sequence, the body connecting part is connected to the cell body and extends in the length direction of the cell body, the extending part extends in a height direction of the cell body, the high-low voltage connecting part is connected to a top end of the extending part and protrudes upward beyond the cell body, and the tab is achievable to be bent at a connecting position of the body connecting part and the extending part and a connecting position of the extending part and the high-low voltage connecting part.

As an optional solution for the pouch cell, a thickness of each tab is D1, a length of the body connecting part in the height direction of the cell body is L1, a length of the extending part in the height direction of the cell body is L2, a length of the high-low voltage connecting part in the height direction of the cell body is L3, a width of the body connecting part is W1, a width of the extending part is W2, a width of the high-low voltage connecting part is W3, and D1, L1, L2, L3, W1, W2, and W3 satisfy the following conditions:

$$0.1\,\mathrm{mm} \leq D1 \leq 1\,\mathrm{mm},$$

and/or

$$0.5 \leq (L2+L3-L1)/L1 \leq 5,$$

and/or

$$0.2 \leq W3/(W1+W2) \leq 1.$$

In the second aspect, a tab bending method for a pouch cell is provided. The pouch cell includes a cell body and tabs, and each tab includes a body connecting part, an extending part, and a high-low voltage connecting part connected in sequence. The tab bending method for the pouch cell includes the following steps:

bending at a connecting position of the body connecting part and the extending part towards a thickness direction of the cell body and extending the extending part in the thickness direction of the cell body; and

bending at a connecting position of the extending part and the high-low voltage connecting part towards a direction close to or away from a cell stack body and making the high-low voltage connecting part protrude from the cell body.

As an optional solution for the tab bending method for the pouch cell, an angle between the body connecting part and the extending part is $\alpha$, an angle between the extending part and the high-low voltage connecting part is $\beta$, a bending radius between the body connecting part and the extending part is R1, a bending radius between the extending part and the high-low voltage connecting part is R2, a thickness of each tab is D1, and $\alpha$, $\beta$, R1, and R2 satisfy the following conditions:

$$60°{\leq}\alpha{\leq}120°,$$

and/or

$$60°{\leq}\beta{\leq}120°,$$

and/or

$$0.5D1{\leq}R1{\leq}25D1,$$

and/or

$$0.5D1{\leq}R2{\leq}25D1.$$

In the third aspect, a battery pack is provided, and a cell stack body is included. The cell stack body is formed by connecting a plurality of cell groups in series, each cell group includes a plurality of pouch cells as described above, and the plurality of pouch cells are stacked in their thickness direction and are electrically connected.

As an optional solution of the battery pack, in one of the cell groups, all the tabs located on a same side of the plurality of pouch cells are stacked to form a single tab structure. The body connecting parts of the tabs form a body connecting structure of the tab structure, the extending parts of the tabs form an extending structure of the tab structure, the high-low voltage connecting parts of the tabs form a high-low voltage connecting structure of the tab structure, the body connecting structure and the extending structure are bent to form an angle, and the extending structure and the high-low voltage connecting structure are bent to form an angle.

As an optional solution of the battery pack, the high-low voltage connecting structure extends towards a direction close to the cell body, or the high-low voltage connecting structure extends towards a direction away from the cell body.

As an optional solution of the battery pack, in two adjacent cell groups, the two tab structures at one end of the two cell groups at least partially overlap and are electrically connected, or the two tab structures at one end of the two cell groups are electrically connected indirectly.

As an optional solution of the battery pack, the battery pack further comprises an insulating bracket. The insulating bracket comprises a first supporting part, the first supporting part is not lower than a top surface of the cell stack body in a height direction of the cell stack body, and the high-low voltage connecting structure of the tab structure is limitedly supported on the first supporting part.

As an optional solution of the battery pack, the battery pack further includes a sampling component. The sampling component includes a voltage sampling member and a temperature sampling member, the voltage sampling member is connected onto the high-low voltage connecting structure, and the temperature sampling member is arranged on the top surface of the cell stack body in the height direction of the cell stack body.

Compared to the related art, beneficial effects of the present invention include the following.

The pouch cell provided by the present invention includes the cell body and the tabs. Each tab includes the body connecting part, the extending part, and the high-low voltage connecting part connected in sequence. The body connecting part is connected to the cell body and extends in the length direction of the cell body. The extending part extends in the height direction of the cell body. The high-low voltage connecting part is connected to the top end of the extending part and protrudes upward beyond the cell body. The tab is achievable to be bent at the connecting position of the body connecting part and the extending part and the connecting position of the extending part and the high-low voltage connecting part. With such an arrangement, the high-low voltage connecting part of the tab of the pouch cell is achievable to be bent to the upper side in the height direction of the pouch cell, facilitating subsequent tab welding and sampling arrangement. Compared with the technical solution in the related art where tab welding and sampling arrangement are at both ends in the length direction of the cell stack body, the solution provided by the present invention improves the convenience and efficiency of subsequent tab welding and sampling arrangement. Meanwhile, it is not necessary to reserve an excessive space in the length direction of the battery pack, so the space utilization and energy density of the battery pack are improved.

Through the tab bending method for the pouch cell provided by the present invention, subsequent tab welding and sampling arrangement are facilitated, the space utilization of the battery pack is improved, and the energy density of the battery pack is increased.

In the battery pack provided by the present invention, by applying the aforementioned pouch cell, the electrical connection of the tabs between multiple pouch cells in the battery pack and sampling arrangement are facilitated, and the space utilization and energy density of the battery pack are improved.

Description of the Drawings

To make the technical solutions provided in the embodiments of the present invention more clearly illustrated, several accompanying drawings required by the embodiments of the present invention for description are briefly introduced as follows. Obviously, the drawings in the following description are merely some embodiments of the present invention, and for a person having ordinary skill in the art, other drawings can be obtained based on the content of the embodiments of the present inventions and these drawings without inventive effort.

FIG. 1 is a schematic structural view of a pouch cell provided by an embodiment of the present invention.
FIG. 2 is a schematic structural view of a tab provided by an embodiment of the present invention.
FIG. 3 is a flow chart of a tab bending method for the pouch cell provided by an embodiment of the present invention.
FIG. 4 is a schematic structural view of a first bending state of the pouch cell provided by an embodiment of the present invention.
FIG. 5 is a schematic structural view of the tab in FIG. 4.
FIG. 6 is a schematic structural view of a second bending state of the pouch cell provided by an embodiment of the present invention.
FIG. 7 is a schematic structural view of the tab in FIG. 6.
FIG. 8 is an exploded view of a first type of battery pack provided by an embodiment of the present invention.
FIG. 9 is an enlarged view of an area A in FIG. 8.
FIG. 10 is a schematic structural view of a second type of battery pack provided by an embodiment of the present invention.
FIG. 11 is an enlarged view of an area B in FIG. 10.
FIG. 12 is a top view of the second type of battery pack provided by an embodiment of the present invention.
FIG. 13 is a schematic structural view of a third type of battery pack provided by an embodiment of the present invention.
FIG. 14 is an enlarged view of an area C in FIG. 13.

Reference Numerals:

10: pouch cell, 11: cell body, 12: tab, 121: body connecting part, 122: extending part, 123: high-low voltage connecting part,
2: cell stack body, 21: tab structure, 211: body connecting structure, 212: extending structure, 213: high-low voltage connecting structure,
3: first side plate,
4: second side plate,
5: insulating bracket, 51: first supporting part, 52: second supporting part, 521: avoidance groove, 53: adhesive-blocking part, 54: fixing part,
6: frame,
7: sampling component, 71: temperature sampling member, 72: voltage sampling member, 73: wire,
8: busbar.

Specific Embodiments

To make the technical problems solved by the present invention, the technical solutions adopted, and the technical effects achieved more clear, the technical solutions of the present invention are further described in the following paragraphs in combination with the drawings and through specific embodiments.

In the description of the present invention, unless clearly specified and defined otherwise, the terms "connected", "connecting", "fixed" should be understood in a broad sense, for instance, it can be a fixed connection, a detachable connection, or an integral connection, it can be a mechanical connection or an electrical connection, it can be a direct connection or an indirect connection through an intermediate medium, and it can be an internal communication between two components or an interaction relationship between two components. For a person having ordinary skill in the art, the specific meaning of the abovementioned terms in the present invention can be understood according to specific circumstances.

In the present invention, unless otherwise clearly specified and defined, the first feature being "above" or "below" the second feature may include direct contact between the first and second features or may include the first and second features not being in direct contact but being in contact through other features between them. Further, the first feature being "on", "above", and "upon" the second feature includes that the first feature is directly above and obliquely above the second feature, or simply means that the level of the first feature is higher than that of the second feature. The first feature being "under", "below", and "beneath" the second feature includes that the first feature is directly under and obliquely under the second feature, or simply means that the level of the first feature is lower than that of the second feature.

In the description of the embodiments, the terms "up", "down", "left", "right", and other orientations or positional relationships are based on the orientations and positional relationships shown in the drawings, are provided to facilitate the description and operation, and are not intended to indicate or imply that the indicated device or element must have a specific orientation or be constructed and operated in a specific orientation, so cannot be understood as limiting the present invention. In addition, the terms "first" and "second" are only used for distinction in description and have no special meaning.

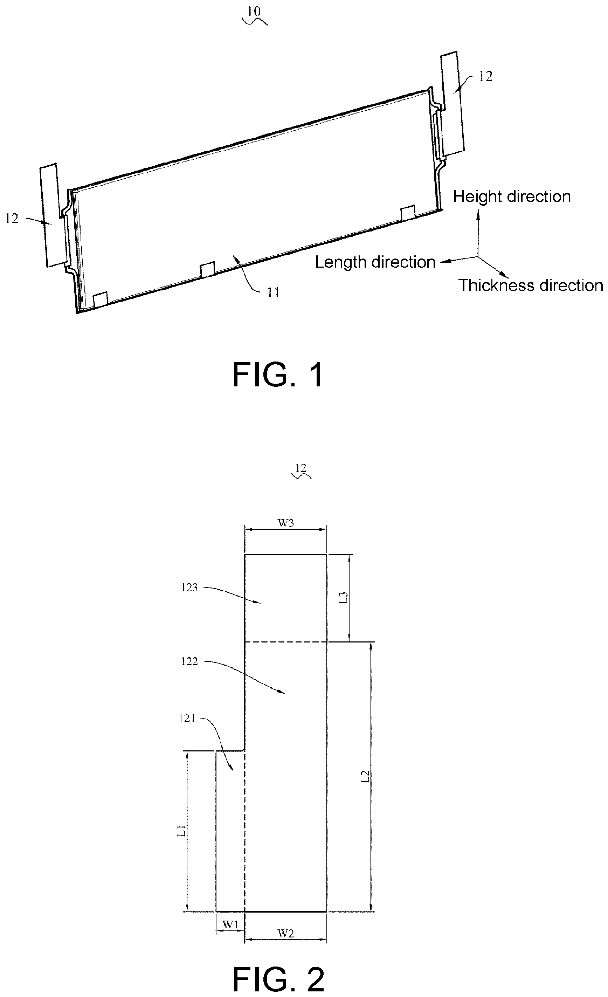

FIG. 1 illustrates a schematic structural view of a pouch cell 10 provided by the present invention. As shown in FIG. 1, the pouch cell 10 includes a cell body 11 and tabs 12, with two tabs 12 symmetrically connected to both ends of the cell body 11 in a length direction. The two tabs 12 are a positive terminal tab and a negative terminal tab.

It should be noted that in the present invention, structural shapes of the positive terminal tab and the negative terminal tab may be the same or different, but their overall inventive concept is the same. Therefore, for ease of understanding, each tab 12 mentioned in the following paragraphs may be either a positive terminal tab or a negative terminal tab, and the positive terminal tab and the negative terminal tab may adopt the same shape structure or may select different shape structures under the same overall inventive concept. Examples are not enumerated one by one herein.

FIG. 2 illustrates a schematic structural view of the tab 12 provided by the present invention. As shown in FIG. 2 together with FIG. 1, the tab 12 includes a body connecting part 121, an extending part 122, and a high-low voltage connecting part 123 connected in sequence. The body connecting part 121 is connected to the cell body 11 and extends in a length direction of the cell body 11, the extending part 122 extends in a height direction of the cell body 11, and the high-low voltage connecting part 123 is connected to a top end of the extending part 122 and protrudes upward beyond a top surface of the cell body 11 in the height direction of the cell body 11. The tab 12 may be bent at a connecting position of the body connecting part 121 and the extending part 122 as well as at a connecting position of the extending part 122 and the high-low voltage connecting part 123. With such an arrangement, the high-low voltage connecting part 123 of the tab 12 of the pouch cell 10 may be bent to the upper side in the height direction of the pouch cell 10, facilitating subsequent tab 12 welding and sampling arrangement. Compared with the technical solution in the related art where tab 12 welding and sampling arrangement are at both ends in the length direction of a cell stack body 2, the solution provided by the present invention may improve the convenience and efficiency of subsequent tab 12 welding and sampling arrangement. Meanwhile, it is not necessary to reserve an excessive space in the length direction of the battery pack, so the space utilization and energy density of the battery pack are improved.

With reference to FIG. 2 again, a thickness of the tab 12 is D1, a length of the body connecting part 121 in the height direction of the cell body 11 is L1, a length of the extending part 122 in the height direction of the cell body 11 is L2, a length of the high-low voltage connecting part 123 in the height direction of the cell body 11 is L3, a width of the body connecting part 121 is W1, a width of the extending part 122 is W2, and a width of the high-low voltage connecting part 123 is W3. Optionally, a value range of the thickness D1 of the tab 12 may be $0.1mm \leq D1 \leq 1mm$. With such an arrangement, the overall structural strength of the tab 12 can be ensured while the bending of the tab 12 is facilitated. Optionally, L1, L2, and L3 may satisfy: $0.5 \leq L2+L3-L1/L1 \leq 5$. With such an arrangement, the overall structural strength of the tab 12 may be ensured while the bending of the tab 12 is facilitated. Optionally, W1, W2, and W3 satisfy: $0.2 \leq W3/W1+W2 \leq 1$, and/or $W1 \leq W2$. As an example, the width W2 of the extending part 122 may be equal to the width W3 of the high-low voltage connecting part 123. Certainly, in other embodiments, the width W3 of the high-low voltage connecting part 123 may also be greater than the width W2 of the extending part 122, which can be designed according to specific needs, and examples are not enumerated one by one herein.

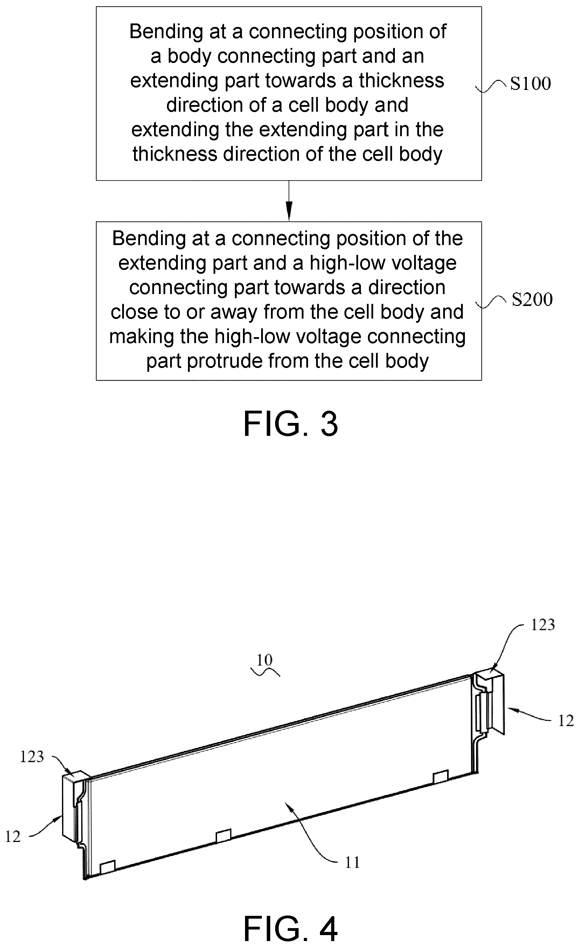

FIG. 3 illustrates a flow chart of a tab bending method for the pouch cell provided by the present invention. As shown in FIG. 3, the tab bending method for the pouch cell includes: In S100, bending is performed at the connecting position of the body connecting part 121 and the extending part 122 towards a thickness direction of the cell body 11, and the extending part 122 is made to extend in the thickness direction of the cell body 11. In S200, the high-low voltage connecting part 123 is bent towards a direction close to or away from the cell body 11 at the connection position of the extending part 122 and the high-low voltage connecting part 123, and the high-low voltage connecting part 123 is made to protrude from the cell body 11. This tab bending method may facilitate subsequent tab welding and sampling arrangement, improve the space utilization of the battery pack, and increase the energy density of the battery pack.

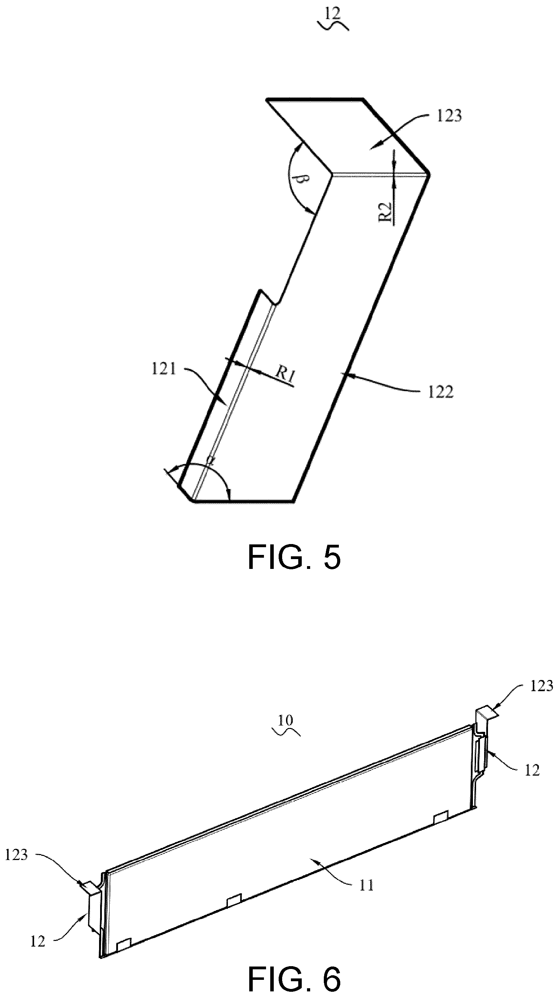

FIG. 4 illustrates a schematic structural view of a first bending state of the pouch cell 10 provided by the present invention. FIG. 5 illustrates a schematic structural view of the tab 12 in FIG. 4. As shown in FIG. 4 to FIG. 5, the tab 12 is bent at the connecting position of the body connecting part 121 and the extending part 122 towards the thickness direction of the cell body 11, making the extending part 122 and the high-low voltage connecting part 123 locate at an end part of the cell body 11 in the length direction. The tab 12 is then bent at the connecting position of the extending part 122 and the high-low voltage connecting part 123 towards the direction close to the cell body 11, making the high-low voltage connecting part 123 bend to the top of the cell body 11 in the height direction of the cell body 11. The high-low voltage connecting part 123 may be used for welding between the tabs 12 of the pouch cell 10 and for sampling arrangement.

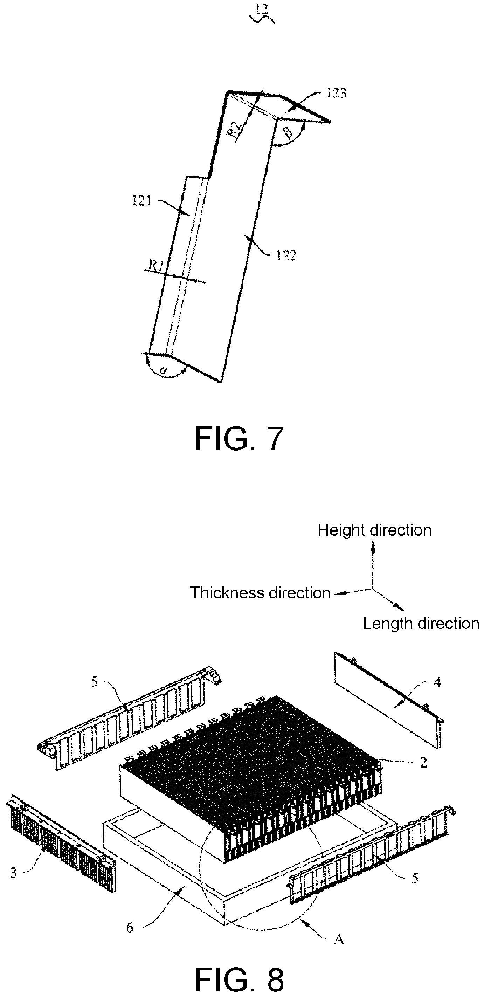

FIG. 6 illustrates a schematic structural view of a second bending state of the pouch cell 10 provided by the present invention. FIG. 7 illustrates a schematic structural view of the tab 12 in FIG. 6. As shown in FIG. 6 to FIG. 7, the tab 12 is bent at the connecting position of the body connecting part 121 and the extending part 122 towards the thickness direction of the cell body 11, making the extending part 122 and the high-low voltage connecting part 123 locate at the end part of the cell body 11 in the length direction. The tab 12 is then bent at the connecting position of the extending part 122 and the high-low voltage connecting part 123 towards the direction away from the cell body 11, making the high-low voltage connecting part 123 bend to the top of the cell body 11 in the height direction of the cell body 11. The high-low voltage connecting part 123 may be used for welding between the tabs 12 of the pouch cell 10 and for sampling arrangement.

It shall be noted that both of the above-mentioned tab 12 bending methods may be applied in the cell stack body 2. The specific method to be adopted may be selected according to the specific assembly scenario and assembly needs, so description is not repeated herein. Regardless of whether the high-low voltage connecting part 123 is bent towards the direction close to or away from the cell body 11, the bending conditions of the tab 12 satisfy the following requirements: An angle between the body connecting part 121 and the extending part 122 is $\alpha$, where $\alpha$ satisfies: $60°\leq\alpha\leq120°$. The specific bending angle between the body connecting part 121 and the extending part 122 may be bent according to actual assembly needs, which is not limited herein. An angle between the extending part 122 and the high-low voltage connecting part 123 is $\beta$, where $\beta$ satisfies: $60°\leq\beta\leq120°$. The specific bending angle between the extending part 122 and the high-low voltage connecting part 123 may be bent according to actual assembly needs, which is not limited herein. A bending radius between the body connecting part 121 and the extending part 122 is R1, and a relationship between R1 and the thickness D1 of the tab 12 satisfies: $0.5D1\leq R1\leq25D1$. Through such an arrangement, the bending between the body connecting part 121 and the extending part 122 is facilitated, and the structural strength of a bending part is ensured as well. A bending radius between the extending part 122 and the high-low voltage connecting part 123 is R2, and a relationship between R2 and the thickness D1 of the tab 12 satisfies: $0.5D1\leq R2\leq25D1$. Through such an arrangement, the bending between the extending part 122 and the high-low voltage connecting part 123 is facilitated, and the structural strength of the bending part is ensured as well.

FIG. 8 illustrates an exploded view of a first type of battery pack provided by the present invention. As shown in FIG. 8, the battery pack includes the cell stack body 2, a first side plate 3, a second side plate 4, insulating brackets 5, and a frame 6. The first side plate 3 and the second side plate 4 are located two both ends of the cell stack body 2 in the thickness direction. The two insulating brackets 5 are located at two ends of the cell stack body 2 in the length direction. The first side plate 3, the second side plate 4, the two insulating brackets 5, and the cell stack body 2 form a cell component, and the entire cell component is arranged within the frame 6. Optionally, the battery pack may also include a top cover and a bottom plate, and the top cover and the bottom plate are sealed at both ends of the frame 6 in the height direction of the frame 6. Further, the cell stack body 2 is formed by connecting a plurality of cell groups in series. Each cell group includes several pouch cells 10 as mentioned above, and within one cell group, several pouch cells 10 are stacked in their thickness direction and electrically connected, and may be in connected in parallel or in series. The high-low voltage connecting structure 213 extends towards the direction close to the cell body 11, or the high-low voltage connecting structure 213 may extend towards the direction away from the cell body 11.

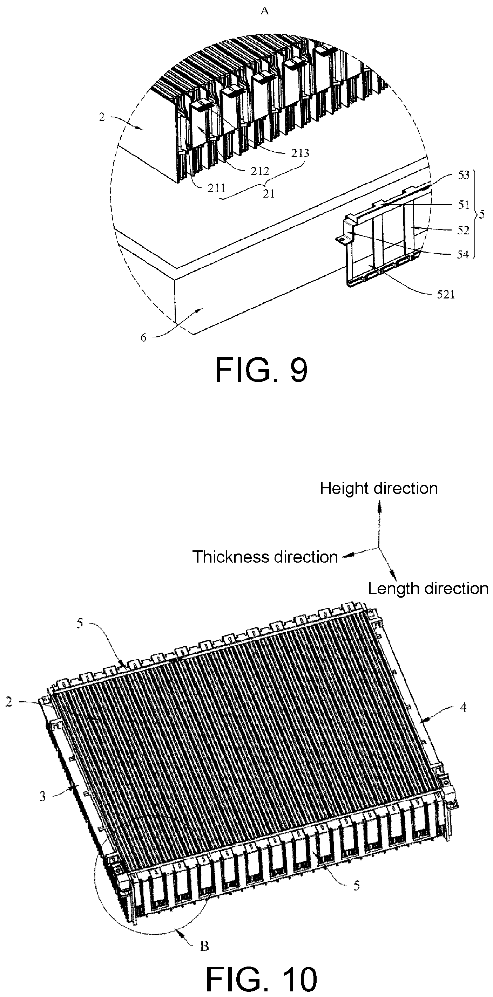

Taking the parallel connection of pouch cells 10 within a cell group as an example, FIG. 9 shows an enlarged view of an area A in FIG. 8. As shown in FIG. 9 together with FIG. 8, in one cell group, all the tabs 12 located on a same side of several pouch cells 10 are stacked to form a single tab structure 21. The body connecting parts 121 of the tabs 12 form a body connecting structure 211 of the tab structure 21. The extending parts 122 of the tabs 12 form an extending structure 212 of the tab structure 21. The high-low voltage connecting parts 123 of the tabs 12 forms a high-low voltage connecting structure 213 of the tab structure 21. In other words, the multiple pouch cells 10 are connected in parallel, and the tabs 12 of the pouch cells 10 are stacked to form the tab structure 21. For instance, multiple positive terminal tabs are stacked to form a positive terminal tab structure, and multiple negative terminal tabs are stacked to form a negative terminal tab structure. The positive terminal tab structures and the negative terminal tab structures between multiple cell groups are connected in series to form the cell stack body 2. Optionally, the body connecting structure 211 and the extending structure 212 may be bent at an angle, with an angle range between the body connecting structure 211 and the extending structure 212 being $60°\leq\alpha\leq120°$. The extending structure 212 and the high-low voltage connecting structure 213 may be bent at an angle, with an angle range between the extending structure 212 and the high-low voltage connecting structure 213 being $60°\leq\beta\leq120°$.

With reference to FIG. 9 again, the positive terminal tab structure of one cell group and the negative terminal tab structure of an adjacent cell group are stacked oppositely, that is, the extending structure 212 of the positive terminal tab structure and the extending structure 212 of the negative terminal tab structure are stacked and at least partially overlap, and the high-low voltage connecting structure 213 of the positive terminal tab structure and the high-low voltage connecting structure 213 of the negative terminal tab structure are stacked and at least partially overlap. In short, the tab structures 21 between the cell groups in FIG. 8 are electrically connected directly, so the need for a busbar 8 to achieve electrical connection of the tab structures 21 is not eliminated, the busbar 8 component is saved, manufacturing process steps are reduced, material costs are lowered, and the manufacturing efficiency is improved. Further, the high-low voltage connecting structure 213 extends in a direction away from the cell stack body 2. Through such an arrangement, heat transfer from the tab structure 21 to the cell stack body 2 is avoided, and the heat dissipation efficiency of the tab structure 21 is improved.

As shown in FIG. 9 together with FIG. 8, the battery pack also includes the insulating brackets 5, and each insulating bracket 5 includes a first supporting part 51. The first supporting part 51 is not lower than a top surface of the cell stack body 2 in a height direction of the cell stack body 2. The high-low voltage connecting structure 213 of the tab structure 21 is limitedly supported on the first supporting part 51. Through such an arrangement, the high-low voltage connecting structure 213 may be allowed to be bent and placed on the first supporting part 51 of the insulating bracket 5, so support for the high-low voltage connecting structure 213 is provided, and the subsequent sampling arrangement is facilitated. By directly placing the sampling arrangement on the top surface of the cell stack body 2 in the height direction of the cell stack body 2, the need to reserve an excessive space in the length direction of the frame 6 is eliminated, the space utilization of the battery pack is improved, and the energy density of the battery pack is enhanced.

As shown in FIG. 9 together with FIG. 8, each insulating bracket 5 further includes a second supporting part 52. The second supporting part 52 is located at an end part of the cell stack body 2 in the length direction, and the second supporting part 52 abuts against an end surface of the cell stack body 2 in the length direction. The first supporting part 51 and the second supporting part 52 may be perpendicular to each other. The first supporting part 51 extends in a direction away from the cell stack body 2 and is used to support the high-low voltage connecting structure 213 of the tab structure 21. Further, an avoidance groove 521 is arranged on the second supporting part 52, and the tab structure 21 of the cell stack body 2 is opposite to the avoidance groove 521, so as to avoid the second supporting part 52 compressing the tab structure 21 after assembly.

As shown in FIG. 9 together with FIG. 8, each insulating bracket 5 further includes an adhesive-blocking part 53. The adhesive-blocking part 53 is connected to one end of the first supporting part 51 away from the cell stack body 2, and the adhesive-blocking part 53 protrudes upward beyond the first supporting part 51 and is used to prevent an encapsulation adhesive from overflowing onto the second supporting part 52.

As shown in FIG. 9 together with FIG. 8, each insulating bracket 5 further includes a fixing part 54. Two fixing parts 54 are connected to two ends of the first supporting part 51, and the two fixing parts 54 are fixedly connected to the first side plate 3 and the second side plate 4 and are used to fix the insulating brackets 5 between the first side plate 3 and the second side plate 4. The cell stack body 2 is located in a space enclosed by the first side plate 3, the second side plate 4, and the two insulating brackets 5.

Exemplarily, the insulating brackets 5 may be integrally formed by injection molding using insulating plastic.

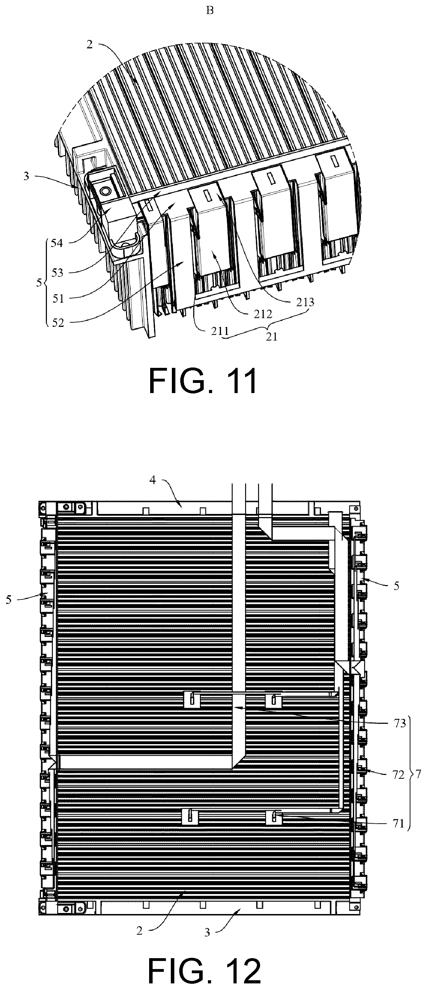

FIG. 10 is a schematic structural view of a second type of battery pack provided by an embodiment of the present invention. FIG. 11 is an enlarged view of an area B in FIG. 10. As shown in FIG. 10 to FIG. 11, the battery pack includes the cell stack body 2, the first side plate 3, the second side plate 4, and the insulating brackets 5. The first side plate 3 and the second side plate 4 are located at both ends of the cell stack body 2 in the thickness direction, and the two insulating brackets 5 are located at both ends of the cell stack body 2 in the length direction. The cell stack body 2 is located in the space enclosed by the first side plate 3, the second side plate 4, and the two insulating brackets 5. The cell stack body 2 is formed by connecting multiple cell groups in series. Each cell group includes several pouch cells 10 as mentioned above, and within one cell group, several pouch cells 10 are stacked in their thickness direction and are connected in parallel. In one cell group, all the tabs 12 located on the same side of several pouch cells 10 are stacked to form a single tab structure 21. The body connecting parts 121 of the tabs 12 form the body connecting structure 211 of the tab structure 21. The extending parts 122 of the tabs 12 form the extending structure 212 of the tab structure 21. The high-low voltage connecting parts 123 of the tabs 12 forms the high-low voltage connecting structure 213 of the tab structure 21.

This second type of battery pack has mostly the same structural layout as the aforementioned first type of battery pack, and the main difference lies in the bending direction of the high-low voltage connecting structure 213 of the tab structure 21. The bending direction of the high-low voltage connecting structure 213 is towards the cell stack body 2 in the second type of battery pack, while the bending direction of the high-low voltage connecting structure 213 is away from the cell stack body 2 in the first type of battery pack.

In addition, to accommodate the different bending methods of the aforementioned high-low voltage connecting structure 213, the structure of the insulating brackets 5 in this second type of battery pack is also different from that of the insulating brackets 5 in the first type of battery pack. With reference to FIG. 10, each insulating bracket 5 includes the first supporting part 51, the second supporting part 52, the adhesive-blocking part 53, and the fixing part 54. The first supporting part 51 is located on the top surface of the cell stack body 2 in the height direction of the cell stack body 2. The second supporting part 52 extends approximately perpendicular to the first supporting part 51 to the end surface of the cell stack body 2 in the length direction of the cell stack body 2 and is used to limit and support the cell stack body 2 in the length direction. In addition, the avoidance groove 521 is formed on the second supporting part 52 to allow the tab structure 21 to pass through, and after the tab structure 21 passes through the avoidance groove 521, the high-low voltage connecting structure 213 bends towards the direction of the cell stack body 2 and is limitedly supported on the first supporting part 51. The adhesive-blocking part 53 is connected to one end of the first supporting part 51 away from the second supporting part 52, the adhesive-blocking part 53 protrudes from the first supporting part 51 in the direction away from the cell stack body 2, and the adhesive-blocking part 53 is used to prevent the encapsulation adhesive from overflowing onto the cell stack body 2. The fixing parts 54 are arranged at both ends of the first supporting part 51 in the thickness direction of the cell stack body 2, and the two fixing parts 54 are used for fixed connection with the first side plate 3 and the second side plate 4, so as to install the insulating brackets 5.

FIG. 12 is a top view of the second type of battery pack provided by an embodiment of the present invention. As shown in FIG. 12, the battery pack also includes a sampling component 7. The sampling component 7 includes a voltage sampling member 72 and a temperature sampling member 71. The voltage sampling member 72 is connected onto the high-low voltage connecting structure 213, and the temperature sampling member 71 is arranged on the top surface of the cell stack body 2 in the height direction of the cell stack body 2. By arranging the sampling component 7 above the cell stack body 2, the space in the height direction of the battery pack may be fully utilized, sampling arrangement may be facilitated, the need to reserve an excessive installation and operation space in the length direction of the frame 6 of the battery pack is eliminated, the space utilization of the battery pack is improved, and energy density is increased. Exemplarily, there are four temperature sampling members 71, and the four temperature sampling members are arranged at intervals on the top surface of the cell stack body 2 in the height direction of the cell stack body 2. One voltage sampling member 72 is connected to two adjacent tab structures 21. Certainly, in other embodiments, the number and arrangement positions of the temperature sampling members 71 may be in other forms, and the number and arrangement mode of the voltage sampling members 72 may also be in other forms, not limited to the above examples. Examples are not enumerated one by one herein.

With reference to FIG. 12 again, the sampling component 7 further includes wires 73. Several temperature sampling members 71 are communicatively connected to a battery management system of the battery pack through the wires 73, so as to implement temperature sampling. Several voltage sampling members 72 are communicatively connected to the battery management system of the battery pack through the wires 73, so as to implement voltage sampling.

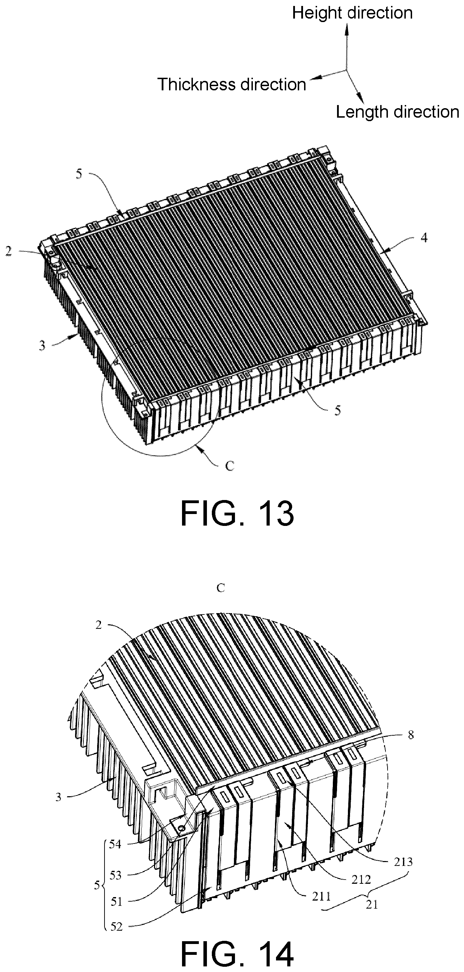

FIG. 13 is a schematic structural view of a third type of battery pack provided by an embodiment of the present invention. FIG. 14 is an enlarged view of an area C in FIG. 13. As shown in FIG. 13 to FIG. 14, the battery pack includes the cell stack body 2, the first side plate 3, the second side plate 4, and the insulating brackets 5. The first side plate 3 and the second side plate 4 are located at both ends of the cell stack body 2 in the thickness direction, and the two insulating brackets 5 are located at both ends of the cell stack body 2 in the length direction. The cell stack body 2 is located in the space enclosed by the first side plate 3, the second side plate 4, and the two insulating brackets 5. The cell stack body 2 is formed by connecting multiple cell groups in series. Each cell group includes several pouch cells 10 as mentioned above, and within one cell group, several pouch cells 10 are stacked in their thickness direction and are connected in parallel. In one cell group, all the tabs 12 located on the same side of several pouch cells 10 are stacked to form a single tab structure 21. The body connecting parts 121 of the tabs 12 form the body connecting structure 211 of the tab structure 21. The extending parts 122 of the tabs 12 form the extending structure 212 of the tab structure 21. The high-low voltage connecting parts 123 of the tabs 12 forms the high-low voltage connecting structure 213 of the tab structure 21.

The layout of most structures in this third type of battery pack is the same as that of the aforementioned second type of battery pack. The main difference is that: in the third type of cell stack body 2, the tab structures 21 of the cell groups are electrically connected through the busbar 8, while in the second type of cell stack body 2, the tab structures 21 of the cell groups are partially overlapped directly to achieve electrical connection. In addition, the tab structures 21 of the cell groups in the first type of cell stack body 2 are partially overlapped directly as well to achieve electrical connection.

Further, in order to adapt to the different connection modes of the tab structures 21 of the cell groups in the cell stack body 2, the structure of the insulating brackets 5 in this third type of battery pack is also different from that of the insulating brackets 5 in the second type of battery pack. With reference to FIG. 13, each insulating bracket 5 includes the first supporting part 51, the second supporting part 52, the adhesive-blocking part 53, and the fixing part 54. The first supporting part 51 is located on the top surface of the cell stack body 2 in the height direction of the cell stack body 2. The second supporting part 52 extends approximately perpendicular to the first supporting part 51 to the end surface of the cell stack body 2 in the length direction of the cell stack body 2 and is used to limit and support the cell stack body 2 in the length direction. In addition, two avoidance grooves 521 are formed on the second supporting part 52 to allow the tab structures 21 of two adjacent cell groups to pass through, and after the tab structures 21 pass through the avoidance grooves 521, the high-low voltage connecting structure 213 bends towards the direction of the cell stack body 2 and is limitedly supported on busbar 8 of the first supporting part 51. The adhesive-blocking part 53 is connected to one end of the first supporting part 51 away from the second supporting part 52, the adhesive-blocking part 53 protrudes from the first supporting part 51 in the direction away from the cell stack body 2, and the adhesive-blocking part 53 is used to prevent the encapsulation adhesive from overflowing onto the cell stack body 2. The fixing parts 54 are arranged at both ends of the first supporting part 51 in the thickness direction of the cell stack body 2, and the two fixing parts 54 are used for fixed connection with the first side plate 3 and the second side plate 4, so as to install the insulating brackets 5.

The present invention further provides an electronic apparatus including the battery pack as described above. The electronic apparatus, by applying the aforementioned battery pack, may have a long battery life. The electronic apparatus of the present application may be used for, but not limited to, backup power supplies, motors, automobiles, large-scale home storage batteries, energy storage, etc.

It should be noted that in the description of the specification, references to terms such as "some embodiments", "other embodiments", etc., indicate that the specific features, structures, materials, or characteristics described in connection with the embodiment or example may be included in at least one embodiment or example of the present invention. In the specification, the illustrative representations of the above terms do not necessarily refer to the same embodiments or examples. Moreover, the described specific features, structures, materials, or characteristics may be combined in any suitable manner in one or more embodiments or examples.

The above are only preferred embodiments of the present invention and applied technical principles. A person having ordinary skill in the art will understand that the present invention is not limited to the specific embodiments described herein. Various obvious changes, readjustments, and substitutions can be made by a person having ordinary skill in the art without departing from the protection scope of the present invention. Therefore, although the present invention has been described in detail through the above embodiments, the present invention is not limited to the above embodiments. Still other equivalent embodiments may be included without departing from the inventive concept, and the scope of the present invention is determined by the scope of the appended claims.

**Claims**

1. A pouch cell, wherein, comprises:

    a cell body; and
    tabs, wherein two of the tabs are symmetrically connected to two ends of the cell body in a length direction of the cell body, each of the tabs comprises a body connecting part, an extending part, and a high-low voltage connecting part connected in sequence, the body connecting part is connected to the cell body and extends in the length direction of the cell body, the extending part extends in a height direction of the cell body, the high-low voltage connecting part is connected to a top end of the extending part and protrudes upward beyond the cell body, and each of the tabs is achievable to be bent at a connecting position of the body connecting part and the extending part and a connecting position of the extending part and the high-low voltage connecting part.

2. The pouch cell according to claim 1, wherein, a thickness of each of the tabs is D1, a length of the body connecting part in the height direction of the cell body is L1, a length of the extending part in the height direction of the cell body is L2, a length of the high-low voltage connecting part in the height direction of the cell body is L3, a width of the body connecting part is W1, a width of the extending part is W2, a width of the high-low voltage connecting part is W3, and D1, L1, L2, L3, W1, W2, and W3 satisfy the following conditions:

$$0.1\text{mm}\leq D1\leq 1\text{mm},$$

and/or

$$0.5\leq (L2+L3-L1)/L1\leq 5,$$

and/or

$$0.2\leq W3/(W1+W2)\leq 1.$$

3. A tab bending method for a pouch cell, wherein, the pouch cell comprises a cell body and tabs, each of the tabs comprises a body connecting part, an extending part, and a high-low voltage connecting part connected in sequence, the body connecting part is connected to the cell body and extends in the length direction of the cell body, the extending part extends in a height direction of the cell body, the high-low voltage connecting part is connected to a top end of the extending part and protrudes upward beyond the cell body, and the tab bending method for the pouch cell comprises the following steps:

    bending at a connecting position of the body connecting part and the extending part towards a thickness direction of the cell body; and
    bending at a connecting position of the extending part and the high-low voltage connecting part towards a direction close to or away from the cell body and making the high-low voltage connecting part protrude from the cell body.

4. The tab bending method for the pouch cell according to claim 3, wherein, an angle between the body connecting part and the extending part is $\alpha$, an angle between the extending part and the high-low voltage connecting part is $\beta$, and $\alpha$ and $\beta$ satisfy the following conditions:

$$60°\leq\alpha\leq120°,$$

and/or

$$60°\leq\beta\leq120°.$$

5. The tab bending method for the pouch cell according to claim 3 or 4, wherein, a bending radius between the body connecting part and the extending part is R1, a bending radius between the extending part and the high-low voltage connecting part is R2, a thickness of each of the tabs is D1, and R1 and R2 satisfy the following conditions:

$$0.5D1\leq R1\leq25D1,$$

and/or

$$0.5D1\leq R2\leq25D1.$$

6. A battery pack, wherein, comprises a cell stack body, the cell stack body is formed by connecting a plurality of cell groups in series, each of the plurality of cell groups comprises a plurality of pouch cells according to any one of claims 1 to 2, the plurality of pouch cells are stacked in their thickness direction and are electrically connected.

7. The battery pack according to claim 6, wherein, in one of the plurality of cell groups, all the tabs located on a same side of the plurality of pouch cells are stacked to form a single tab structure, the body connecting parts of the tabs form a body connecting structure of the tab structure, the extending parts of the tabs form an extending structure of the tab structure, the high-low voltage connecting parts of the tabs form a high-low voltage connecting structure of the tab structure, the body connecting structure and the extending structure are bent to form an angle, and the extending structure and the high-low voltage connecting structure are bent to form an angle.

8. The battery pack according to claim 7, wherein, the high-low voltage connecting structure extends towards a direction close to the cell body, or the high-low voltage connecting structure extends towards a direction away from the cell body.

9. The battery pack according to claim 8, wherein, in two adjacent of the plurality of cell groups, the two tab structures at one end of the two of the plurality of cell groups at least partially overlap and are electrically connected, or the two tab structures at one end of the two of the plurality of cell groups are electrically connected indirectly.

10. The battery pack according to claim 9, wherein, the battery pack further comprises an insulating bracket, the insulating bracket comprises a first supporting part, the first supporting part is not lower than a top surface of the cell stack body in a height direction of the cell stack body, and the high-low voltage connecting structure of the tab structure is limitedly supported on the first supporting part.

11. The battery pack according to claim 10, wherein, the battery pack further comprises a sampling component, the sampling component comprises a voltage sampling member and a temperature sampling member, the voltage sampling member is connected onto the high-low voltage connecting structure, and the temperature sampling member is arranged on the top surface of the cell stack body in the height direction of the cell stack body.

FIG. 1

FIG. 2

Bending at a connecting position of a body connecting part and an extending part towards a thickness direction of a cell body and extending the extending part in the thickness direction of the cell body

S100

Bending at a connecting position of the extending part and a high-low voltage connecting part towards a direction close to or away from the cell body and making the high-low voltage connecting part protrude from the cell body

S200

FIG. 3

FIG. 4

FIG. 5

FIG. 6

FIG. 7

FIG. 8

A

FIG. 9

Height direction

Thickness direction

Length direction

FIG. 10

B

FIG. 11

FIG. 12

Height direction

Thickness direction

Length direction

# FIG. 13

C

# FIG. 14

## INTERNATIONAL SEARCH REPORT

| International application No. |
| --- |
| **PCT/CN2023/127615** |

### A. CLASSIFICATION OF SUBJECT MATTER

H01M 50/533(2021.01)i

According to International Patent Classification (IPC) or to both national classification and IPC

### B. FIELDS SEARCHED

Minimum documentation searched (classification system followed by classification symbols)

IPC:H01M50/-

Documentation searched other than minimum documentation to the extent that such documents are included in the fields searched

Electronic data base consulted during the international search (name of data base and, where practicable, search terms used)

VEN, CNTXT, ENTXTC, DWPI, CNKI: 电池 OR 电芯; 极耳; 弯折 OR 折弯 OR 翻折; battery OR cell; tab; bend+

### C. DOCUMENTS CONSIDERED TO BE RELEVANT

| Category* | Citation of document, with indication, where appropriate, of the relevant passages | Relevant to claim No. |
| --- | --- | --- |
| X | CN 216597892 U (EVERGRANDE NEW ENERGY POWER TECHNOLOGY (SHENZHEN) CO., LTD.) 24 May 2022 (2022-05-24)<br>description, paragraphs 0033-0038 and 0043-0044, and figures 1-2 and 4-5 | 1-11 |
| A | CN 206250271 U (SHENZHEN WUXIAN ENERGY TECHNOLOGY CO., LTD.) 13 June 2017 (2017-06-13)<br>entire description | 1-11 |
| A | CN 114792869 A (ENVISION POWER TECHNOLOGY (JIANGSU) CO., LTD. et al.) 26 July 2022 (2022-07-26)<br>entire description | 1-11 |
| A | CN 207038612 U (GUANGZHOU AUTOMOBILE GROUP CO., LTD.) 23 February 2018 (2018-02-23)<br>entire description | 1-11 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 November 2023** | **05 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/127615**

| Patent document<br>cited in search report | | | Publication date<br>(day/month/year) | Patent family member(s) | Publication date<br>(day/month/year) |
|---|---|---|---|---|---|
| CN | 216597892 | U | 24 May 2022 | None | |
| CN | 206250271 | U | 13 June 2017 | None | |
| CN | 114792869 | A | 26 July 2022 | None | |
| CN | 207038612 | U | 23 February 2018 | None | |

Form PCT/ISA/210 (patent family annex) (July 2022)